# EUROPEAN PATENT APPLICATION

(11) **EP 4 667 544 A1**
(43) Date of publication of application: **24.12.2025**
(21) Application number: 25174686.3
(22) Date of filing: 07.05.2025
(51) Int. Cl.: C09D 183/04, B64G 1/58

(54) **PROTECTIVE COATING FOR ABLATOR COMPOSITION**

(30) Priority: 18.06.2024 US 202418747177
(71) Applicant: The Boeing Company, Arlington, VA 22202 (US)
(72) Inventor: COURTER, Kelly Jonathan, ARLINGTON, 22202 (US); CHAFFEY, Michele L., ARLINGTON, 22202 (US)
(74) Representative: Plasseraud IP

(57) **Abstract**

Disclosed herein is a protective coating for a thermal protection ablator layer of a high-speed vehicle, the protective coating including a cured room-temperature-vulcanizing (RTV) silicone adhered to the thermal protection ablator layer through siloxane linkages, where the cured RTV silicone is formed from at least one organosilicon compound.

## Description

### FIELD

This disclosure relates generally to low-density ablator compositions for high-speed vehicles, and more particularly to protective coatings that protect the ablator compositions from erosion due to elements in the atmosphere.

### BACKGROUND

Ablative materials are used in a variety of applications to protect and insulate vehicles and structures that experience extreme thermal events. For example, many high-speed aerial vehicles, such as those that exit and enter the atmosphere, experience extreme temperatures. Generally, ablative materials are applied to exterior surfaces that tend to experience the extreme temperatures (i.e., the base heat shield of a capsule entry vehicle, or the leading-edge surfaces of a high-speed aircraft). However, conventional low-density ablative materials are subject to rapid erosion when subjected to high-speed rain or sand impact or can be damaged by improper handling. Higher-density ablative materials that can withstand rain erosion (e.g., refractory metals, carbon-based composites, or quartz-reinforced-phenolics) or rough handling are heavy, which is not desirable in an aerial vehicle.

### SUMMARY

The subject matter of the present application has been developed in response to the present state of the art, and in particular, in response to the shortcomings of conventional methods for forming low-density ablator compositions for vehicles, that have not yet been fully solved by currently available techniques. Accordingly, the subject matter of the present application has been developed to provide a method for forming protective coatings for low-density ablator compositions of vehicles, and associated compositions and vehicles, which overcomes at least some of the above-discussed shortcomings of prior art techniques.

The following is a non-exhaustive list of examples, which may or may not be claimed, of the subject matter, disclosed herein.

Disclosed herein is a protective coating for a thermal protection ablator layer of a high-speed vehicle as laid out in the appended claims..

Further disclosed herein is a thermal protection system for a high-speed vehicle as laid out in the appended claims.

A high-speed vehicle includes the thermal protection system is laid out in the appended claims.

Additionally disclosed herein is a method as laid out in the appended claims.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only certain examples of the subject matter and are not therefore to be considered to be limiting of its scope, the subject matter will be described and explained with additional specificity and detail through the use of the drawings, in which:
Figure 1 is a side-view illustration of an aerospace vehicle utilizing a protective coating over an ablator composition, according to one or more examples of the present disclosure;
Figure 2 is cross-sectional side view of the protective coating disposed on a reinforced ablator composition, according to one or more examples of the present disclosure;
Figure 3A is a top view of a protective coating disposed on a honeycomb core embedded in an ablator composition, according to one or more examples of the present disclosure;
Figure 3B is a cross-sectional side view of a reinforced ablator composition prior to application of a protective coating, according to one or more examples of the present disclosure;
Figure 4 is a schematic flow chart of a method of applying a protective coating to an ablator composition, according to one or more examples of the present disclosure;
Figure 5A is a depiction of an ablator composition prior to rain erosion testing, according to one or more examples of the present disclosure;
Figure 5B is a depiction of an ablator composition without a protective coating following rain erosion testing, according to one or more examples of the present disclosure; and
Figure 5C is a depiction of an ablator composition with a protective coating following rain erosion testing, according to one or more examples of the present disclosure.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

The present disclosure includes multiple examples that overcome the shortcomings of conventional ablative compositions. Because high-density ablative compositions that are resistant to rain/particulate erosion are too heavy, low-density ablative compositions are better suited for use with aerial vehicles. However, low-density ablative compositions are subject to rain erosion and damage that may occur as a result of improper handling.

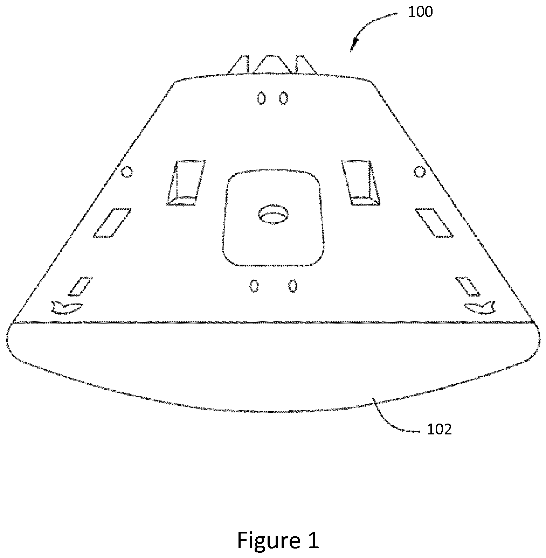

In examples of the present disclosure, a protective coating for low-density ablative compositions is disclosed that is resistant to rain/particulate erosion in high-speed vehicles and handling damage. Certain details are set forth in the following description and in Figures 1-4 to provide a thorough understanding of various implementations of the disclosure. Other details describing structures and systems associated with ablator compositions and forming ablative thermal protection systems are not necessarily described to avoid obscuring the description of the various implementations.

Referring to Figure 1, shown here is one example of an aerospace vehicle structure (also referred to as "vehicle") 100 having a protective coating 102 over an ablator composition, according to examples of the subject disclosure. The aerospace vehicle structure 100 is shown flying through the atmosphere where high velocities create extremely elevated thermal loads across the leading edge or surface of the aerospace vehicle structure 100.

Although the protective coating 102 is depicted here on an aerospace vehicle, it is contemplated that the protective coating 102 may find use on any form of high-speed mobile platform, including manned or unmanned space vehicles, mobile airborne vehicles, ground-based vehicles, or marine vehicles. The protective coating 102 is suited for use with ablator compositions on manned or unmanned vehicles or platforms that are expected to encounter rain erosion due to high-speed travel through rain and other abrasive elements (e.g., dust). The protective coating 102 may also find use on non-mobile structures that are subject to frequent extreme weather (i.e., high-speed wind and rain). In certain examples, the protective coating 102 is disposed on all surfaces of the aerospace vehicle, or other structure. In other examples, the protective coating 102 is disposed on specific surfaces that are prone to experiencing elevated temperatures including, but not limited to, wings, fuselage, tail fin, nose cone, antenna cover, etc.

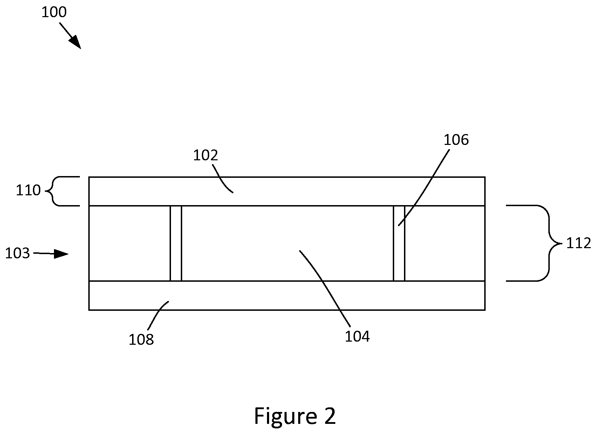

Referring now to Figure 2, shown here is a cross-sectional side view of the protective coating 102 applied to an ablator layer 103. The ablator layer 103 includes, in certain examples, the ablator composition 104 disposed within a reinforcing framework 106. The protective coating 102, the ablator composition 104 and the framework 106 are disposed on an outer surface 108 of the vehicle 100. The outer surface 108, or skin of the vehicle, is the surface that is exposed to elements in the atmosphere and, beneficially, is protected from those elements by the protective coating 102 and the ablator layer 103. Additionally, the protective coating 102 and the ablator layer 103 protect structures and/or systems (not shown) that are internal to the vehicle 100 and disposed adjacent the outer surface 108.

The description of the protective coating 102 and the ablator layer 103 as applied to the vehicle 100 is not to be construed as limiting, rather it is merely an example of one system in one environment in which the features of the present disclosure have beneficial utility. It is contemplated that the protective coating 102 and the ablator layer 103 may be employed with a wide variety of structures and systems that experience high thermal loads for short or extended duration to create a thermal protection system.

In certain examples, the protective coating 102 is a cured roomtemperature-vulcanizing ("RTV") silicone that is adhered to the ablator layer 103 through siloxane linkages. The RTV silicone, in certain examples, is created from at least one organosilicon compound. In certain examples, the RTV silicone, or cured silicone, may be created from two or more organosilicon compounds, and also may include other additives and solvents. For example, a first organosilicon compound may be methyltrimethoxysilane. In certain examples, the second organosilicon compound is octamethylcyclotetrasiloxane. One such RTV silicone that is suitable for use as a protective coating 102 is DOWSIL^{™} 1-2577 sold by The Dow Chemical Company of Midland, Michigan, including about 2% Kevlar pulp or 4% CAB-O-Sil^{®}, although other coatings may also be used. Examples of other compounds include, but are not limited to, DOWSIL^{™} 732 (and in embodiments, including 2% Kevlar pulp), and SYLGARD^{™} 184 both of which are also sold by The Dow Chemical Company.

The RTV silicone, in certain examples, is created with the first organosilicon compound having a volume concentration, before curing, in a range of between about 0.5% to about 7.5% in one example, or between about 1% and about 6% in another example, or between about 1% and 5% in yet another example, or between about 2% and 4% in a further example, of the total volume of the RTV silicone. When the term "about" is used herein with respect to a numerical value, it refers to a range of values that are within ±10% of the stated numerical value. The RTV silicone is made of mixtures of the organosilicon compound, fillers, and organoreactive silane catalysts. In certain examples, the RTV silicone is a one-component silicone that cures using the moisture in the atmosphere at room temperature.

In certain examples, the second organosilicon compound has a concentration in the RTV silicone, before curing, in a range of between about 0.010% and about 0.75% in one example, or between about 0.010% and about 0.60% in another example, or between about 0.01% and about 0.50% in yet another example. Solvents, such as toluene, are added to the RTV silicone to achieve a desired viscosity. In certain examples, the viscosity of the RTV silicone is selected to control spreadability/applicability of the RTV silicone on the ablator layer 103. A less viscous RTV silicone can beneficially form thin dried layers on the order of about 0.005 cm (0.002 inches) in one example, or between 0.003 and 0.008 cm (0.001 and 0.003 inches) in some examples. The viscosity of the RTV silicone, in certain examples, is in the range of between about 0.1 Pa•s (100 cP) and about 1.0 Pa•s (1000 cP) in one example, or between about 0.15 Pa•s (150 cP) to about 0.8 Pa•s (800 cP) in another example, or between about 0.2 Pa•s (200 cP) and 0.5 Pa•s (500 cP) in yet another example.

The protective coating 102, in certain examples, has thickness 110 in a range of between about 0.013 cm and 0.051 cm (0.005 inches and 0.020 inches) in one example, or between about 0.051 cm and 0.25 cm (0.005 inches and 0.10 inches) in yet another example. A desired thickness 110 is achieved by repeatedly applying layers of the RTV silicone and then allowing it to flash off solvent before applying another layer. This beneficially allows for use of a low viscosity RTV silicone, which is easier to apply, to achieve a controlled thickness for protecting the ablator layer 103. The thickness 110 of the protective coating 102 has a ratio to a thickness 112 of the ablator layer 103 in a range of between about 0.0038 cm and 0.51 cm (0.0015 inches and about 0.20 inches) in one example, or between about 0.041 cm and 0.25 cm (0.016 and 0.10 inches) in yet another example.

In certain examples, the RTV silicone includes additives to improve applicability and adhesion of the protective coating 102 to the ablator layer 103. For example, amorphous silica (e.g., fumed silica) may be added in different concentrations to adjust viscosity and adhesion. **In** certain examples, the fumed silica weight percentage is in the range of between about 1% and about 5%, in one example, or from about 2% to about 4%, in another example.

Other additives are included to increase hardness and improve erosion resistance. For example, pulp of high-strength aramid synthetic fibers may be added to the RTV silicon in varying weight percentages. **In** certain examples, the pulp weight percentage is in the range of between about 1 to about 5% or from about or between about 2% and about 4%.

**In** certain examples, the ablator composition 104 comprises a base silicone resin, a curing agent, a low-density filler material, at least one endothermically decomposing material, optionally a thinning fluid, and other additives. The ablator composition 104 utilizes endothermically decomposing materials in a silicone matrix to allow for generation of gaseous thermal decomposition products and their venting through the ablator composition 104 without causing excessive swelling. The endothermically decomposing material functions to remove heat from the vehicle as it decomposes. Examples of endothermically decomposing materials include boron-containing compounds, phosphate salts, and combinations thereof.

Low-density filler material (e.g., silica glass micro balloons) are used to further decrease the density of the ablator composition 104. **In** certain examples, the ablator composition 104 enables the utilization of a lower thickness ablator layer 103, resulting in a lower vehicle 100 weight, lower cost and/or higher payload mass. The ablator layer 103 has a thickness 112 that is selected according to the application, whether that be a space vehicle or an airplane. The thickness 112, in certain examples, is in the range of between about 0.51 cm (0.2 inches) and about 7.6 cm (3.0 inches).

The ablator composition 104, in certain examples, is reinforced with the framework core (or "framework") 106. The framework 106 is a honeycomb-style structure disposed on the outer surface 108 of the vehicle 100. Cavities formed by the framework 106 are filled with the ablator composition 104. The framework 106, in certain examples, is bonded to the outer surface 108 with an adhesive. The framework 106 may be a phenolic fiberglass material, however other suitable materials that are chemically compatible with the ablator composition 104 may be used. The ablator composition 104 may be coated with the protective coating 102 via any suitable method including, but not limited to, spray coating, roll coating, brush coating, dipping, troweling, etc.

Although the present disclosure is described having a honeycomb-style framework, alternative reinforcement mechanisms may be utilized, including but not limited to, a reinforcement fabric created from continuous or discontinuous fibers that is impregnated with the ablator composition 104.

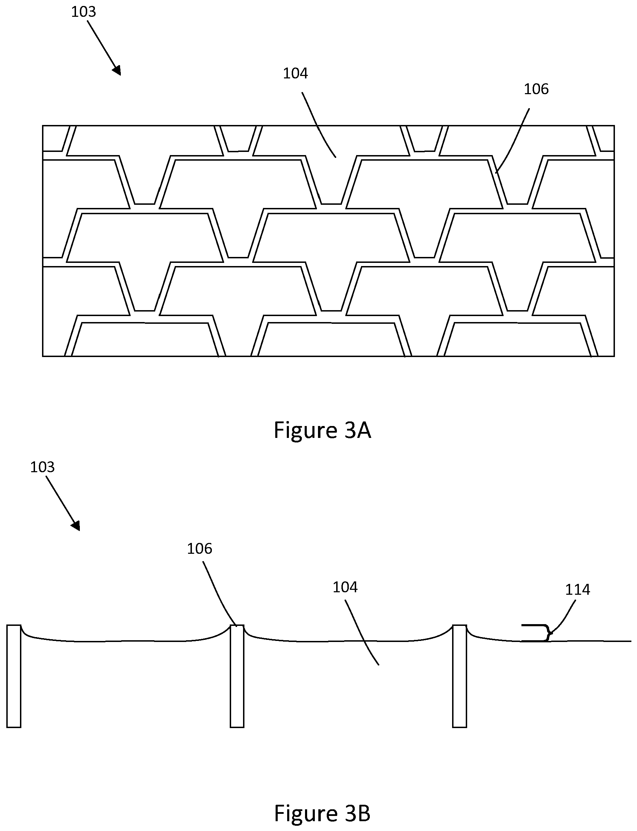

Referring now to Figure 3A, shown here is a top view diagram illustrating one example of a translucent protective coating on top of the ablator layer 103, according to examples of the subject disclosure. As depicted, only an external surface of the vehicle is shown here. In certain examples, the framework 106 creates a repeating geometric pattern with cavities for receiving the ablator composition 104. The protective coating 102 is disposed on top of the ablator composition 104 and the framework 106 top surfaces. It is contemplated that any repeating geometric pattern may be used, including, but not limited to a traditional hexagonal honeycomb, the depicted 8-sided polygon, etc.

In certain examples, the ablator layer 103 is created by a variety of manufacturing techniques, including troweling the ablator composition 104 into the cavities created by the framework 106. Beneficially, the framework 106 improves retention of the ablator composition 104 as it decomposes and the framework 106 reduces crack formation in the ablator composition 104.

Figure 3B depicts a side view of a cross-section of the ablator layer 103 before application of the protective coating 102. The surface of that ablator layer 103, following the application of the ablator composition 104 to the cavities of the framework 106, may have high points at the framework 106. In other words, the framework 106 may extend a distance 114 above the ablator composition 104. Prior to application of the protective coating 102, in certain examples, the surface of the ablator layer 103 may be leveled. A variety of techniques may be used to level the surface of the ablator layer 103, including, but not limited to, manual or mechanical sanding, abrasive blasting, and chemical milling or etching.

In certain examples, after leveling of the ablator layer 103, the surface is further prepared by removing any remaining loose particles. Any suitable technique for removing loose particles of ablator composition 104 and framework 106 may be employed. For example, a vacuum, compressed air, a sheet of tack cloth or a dust removal film is applied to the surface of the ablator layer 103 and subsequently removed.

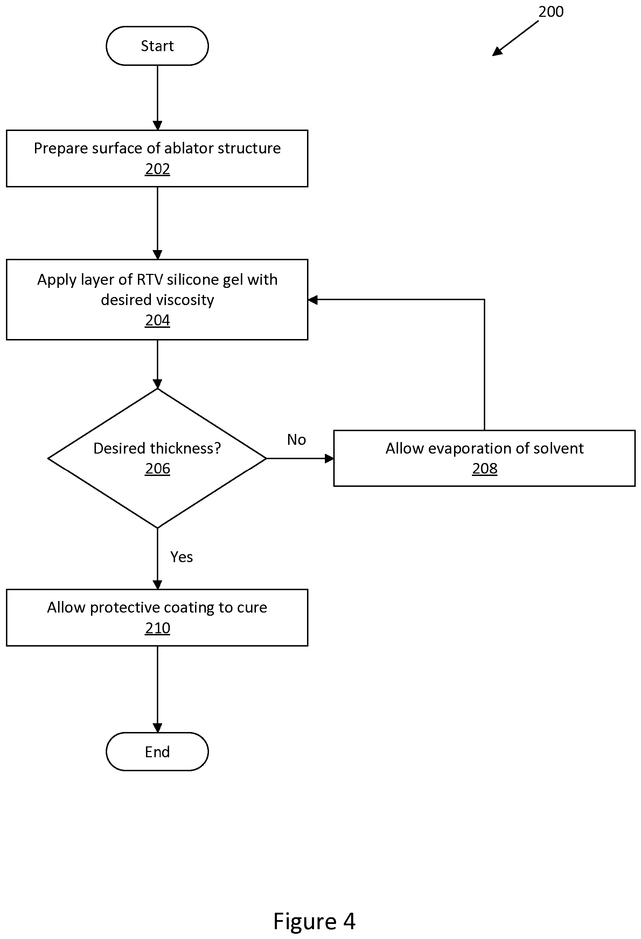

Referring to Figure 4, according to some examples, a method 200 of integrating a protective coating 102 with a thermal protection ablator layer is shown. The method 200 includes (block 202) preparing the surface of the ablator layer 103. Preparing the surface of the ablator layer 103, in certain examples, includes leveling the surface and removing any loose particles that remain after leveling, as described above with reference to Figure 3B.

The method 200 additionally includes (block 204) applying or depositing a layer of the protective coating 102 having a desired viscosity. The protective coating 102 can be applied using various techniques including spraying, rolling or brushing (i.e., painting techniques), dipping, troweling, or like techniques. In certain examples, the protective coating 102 is the RTV silicone described above with respect to Figure 2, and has a viscosity in the range of between about 0.1 Pa•s (100 cP) and about 1.0 Pa•s (1000 cP). The RTV silicone is applied having a suitable layer thickness. It is contemplated that multiple layers of RTV silicone may be applied to reach a desired protective coating 102 thickness 110. If the desired thickness (decision block 206) is not reached, the layer of RTV silicone is allowed to "flash" (block 208; i.e., allow evaporation of solvent) and the method 200 continues by applying another layer of RTV silicone (block 204).

Once a desired protective coating 102 thickness 110 is reached, the method 200 includes allowing the protective coating 102 to cure (block 210). In certain examples, each of the steps described may be performed at room temperature and pressure. In other examples, temperatures and pressures may be altered to either speed up or slow down the curing of the RTV silicone. In embodiments, clear, pinhole-free coatings can be achieved.

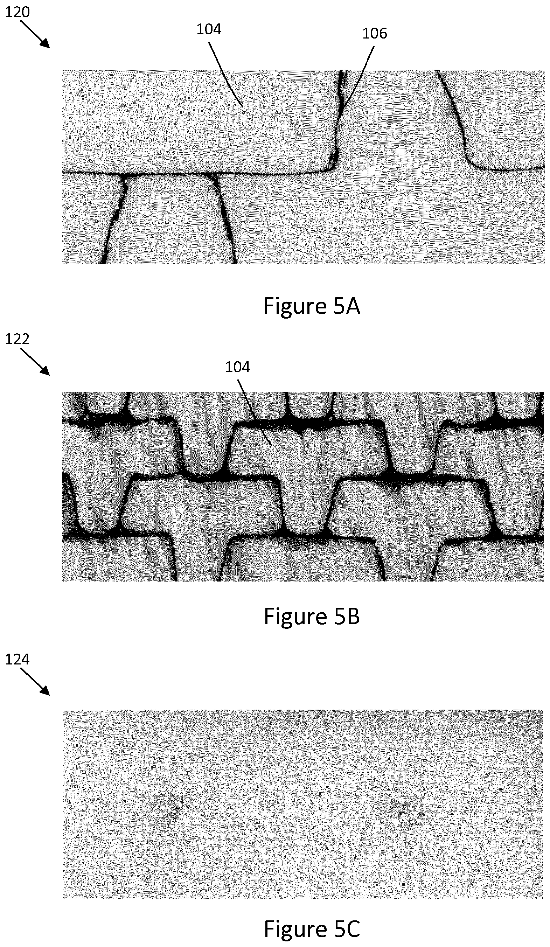

Referring now to Figures 5A, 5B, 5C, according to some examples, shown here are samples of ablator composition 104. In particular, Figure 5A depicts a sample 120 of reinforced ablator composition 104 prior to rain erosion testing in a whirling arm test machine. The ablator composition 104 has a smooth and substantially continuous surface and may be disposed within the framework 106. The protective coating 102, which may be optically translucent, beneficially creates a clear, pinhole-free protective layer over the ablator composition 104 and the framework 106.

Figure 5B depicts a sample 122 of the ablator composition 102 without the protective coating 102 following testing in the whirling arm test machine. As known to those of skill in the art, the whirling arm test machine is designed to simulate high-speed flight in rain environments. Some test machines feature an 8-foot-diameter rotating arm that allows coupon specimen testing at speeds exceeding 650 mph. Such test machines also allow for testing at different amounts of rain.

The unprotected sample 122, following testing in the whirling arm test machine, exhibits signs of heavy rain erosion. Relatively deep grooves are formed in the ablator composition 104. The erosion can affect heat dissipation and flight control, and is not desirable.

Referring now to Figure 5C, depicted here is a sample 124 of the ablator composition 104, with the protective coating 102, after testing in the whirling arm test machine. The sample 124 exhibits resistance to rain erosion. Beneficially, no elongated grooves form due to rain erosion. The protective coating 102 also prevents a decrease in thickness of the ablator composition 104 due to rain erosion. In certain testing environments, the ablator composition 104, without a framework 106, lost approximately 0.28 cm (0.11 inches). In the same testing environment, the ablator composition with a framework lost 0.20 cm (0.08 inches), while the ablator composition with the protective coating 102 loss less than 0.05 cm (0.02 inches). In certain examples, additives such as Kevlar pulp increase the ability of the protective coating 102 to resist rain erosion.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its spirit or essential characteristics. The described examples are to be considered in all respects only as illustrative and not restrictive. All changes which come within the meaning and range of equivalency of the claims are to be embraced within their scope.

## Claims

1. A protective coating (102) for a thermal protection ablator layer (104) of a high-speed vehicle (100), the protective coating (102) comprising a cured roomtemperature-vulcanizing (RTV) silicone adhered to the thermal protection ablator layer (104) through siloxane linkages, where the cured RTV silicone is formed from at least one organosilicon compound.

2. The protective coating (102) of claim 1, wherein the at least one organosilicon compound is methyltrimethoxysilane.

3. The protective coating (102) of any one of claim 1 and 2, wherein the at least one organosilicon compound has a volume concentration in a range of between, and inclusive of, 1% and 6% of the RTV silicone before curing.

4. The protective coating (102) of claim 3, wherein the cured RTV silicone is formed from at least two organosilicon compounds.

5. The protective coating (102) of claim 4, wherein a second organosilicon compound is octamethylcyclotetrasiloxane with a volume concentration in a range of between, and inclusive of, 0.01% and 0.60% of the RTV silicone before curing.

6. The protective coating (102) of any one of claims 1 to 5, wherein the cured RTV silicone has a thickness in a range of between, and inclusive of, 0.013 cm (0.005 inches) and 0.051 cm (0.020 inches).

7. The protective coating of (102) of any one of claims 1 to 6, wherein the cured RTV silicone has a thickness in a range of between, and inclusive of, 0.020 cm (0.008 inches) and 0.030 cm (0.012 inches).

8. The protective coating (102) of any one of claims 1 to 7, wherein a ratio of a thickness of protective coating (102) to a thickness of the ablator layer (104) is between, and inclusive of, 0.004 cm (0.0016 inches) and 0.25 cm (0.10 inches).

9. A thermal protection system for a high-speed vehicle (100), the thermal protection system (100) comprising:
an ablator layer (104) disposed on an external surface (106) of the high-speed vehicle, the ablator layer (104) comprising an ablator composition; and
a protective coating (102) of any one of claims 1 to 8.

10. The thermal protection system (100) of claim 9, wherein the ablator layer (104) has a thickness in a range of between, and inclusive of, 0.5 cm (0.2 inches) and 7.6 cm (3.0 inches).

11. The thermal protection system (100) of any one of claims 9 and 10, wherein the RTV silicone has a viscosity, before curing, in a range of between, and inclusive of, 0.1 Pa•s (100 cP) and 1 Pa•s (1000 cP).

12. A high-speed vehicle comprising the thermal protection system of any one of claims 9 to 11, wherein the high-speed vehicle is selected from the group consisting of manned or unmanned space vehicles, mobile airborne vehicles, ground-based vehicles, or marine vehicles.

13. A method comprising integrating a protective coating (102) of any one of claims 1 to 8 with a thermal protection ablator layer (104).

14. The method of claim 13, further comprising leveling an external surface of the ablator layer (104).

15. The method of any one of claims 13 and 14, further comprising depositing and curing at least one layer of the at least one organosilicon compound.
